# EUROPEAN PATENT SPECIFICATION

(11) **EP 1 839 735 B1**
(45) Date of publication and mention of the grant of the patent: **30.08.2017**
(21) Application number: 05818795.6
(22) Date of filing: 14.12.2005
(51) Int. Cl.: B01J 8/02

(54) **A TRANSVERSE TUBULAR HEAT EXCHANGE REACTOR AND A PROCESS FOR CATALYTIC SYNTHESIS THEREIN**
TRANVERSALER ROHRWÄRMEAUSTAUSCHREAKTOR UND VERFAHREN ZUR KATALYTISCHEN SYNTHESE DARIN
REACTEUR ECHANGEUR DE CHALEUR TUBULAIRE TRANSVERSAL ET PROCEDE DE SYNTHESE CATALYTIQUE DANS CELUI-CI

(30) Priority: 14.12.2004 CN 200410103104
(43) Date of publication of application: 03.10.2007
(73) Proprietor: Lou, Ren, Zhengjiang, Hangzhou 310013 (CN)
(72) Inventor: LOU, Shoulin, Hangzhou 310013 (CN)
(74) Representative: Peterreins, Frank
(86) International application number: PCT/CN2005/002188
(87) International publication number: WO 2006/063524

(56) References cited:
- EP-A- 1 027 922
- CN-A- 1 132 662
- DE-A1- 3 007 203
- DE-A1- 3 708 957
- GB-A- 680 241
- JP-A- 60 102 929
- JP-A- 60 102 930
- US-A- 3 929 421
- US-A- 3 932 139
- US-A- 4 420 462
- US-A- 4 696 799

## Description

### Technical Field

The present invention, in the chemical engineering field, relates to a device for gas-solid phase catalytic reaction, particularly for fluid catalytic reaction and heat transfer process, and such a device is especially suitable for use in the synthesis of methanol, dimethyl ether, hydrocarbons and the like, as well as in the synthesis of ethylene oxide by the oxidation of ethylene, vinyl acetate, phthalic anhydride, ammonia and the like. The present invention also relates to a method for catalytic synthesizing, for example, methanol, dimethyl ether, hydrocarbons, ethylene oxide, vinyl acetate, phthalic anhydride, ammonia and the like by using said device.

### Background of the Invention

During the gas-solid phase exothermic catalytic reactions for the synthesis of methanol, methylamine, dimethyl ether, ammonia, and hydrocarbons under pressure, the continuously liberated reaction heat will cause temperature elevation in the catalyst layer. In order to improve the reactor efficiency, it is necessary to remove the reaction heat so as to decrease the reaction temperature. One method for reducing the reaction temperature, which had been widely used in industrial reactors, was of multi-stage quenching with feed gases (See Nitrogen No 210 July/Aug 1994). However, although the temperature of the reaction gases is lowered by quenching with feed gases in this method,, the concentration of the reactants is correspondingly lowered simultaneously, which is detrimental to the synthetic efficiency.

An alternative reaction tower is a shell-and-tube reactor for methanol synthesis as disclosed in DE 2123950 by Lurgi Company, Germany. The reaction tower comprises a pressured shell, a number of round tubes filled with catalyst, an upper tube plate and a lower tube plate, the round tubes are located between the upper and lower tube plates. Feed gases are introduced thereinto through an upper gas-inlet, distributed into each of the round tube, and reacted to synthesize methanol in the catalyst layer inside the round tubes. A stream of water is introduced laterally into the interspaces between the round tubes, and boiled by reaction heat. The boiled water between the tubes thus can remove the reaction heat continuously. The vapor produced is discharged out of the reaction tower through a side tube, while the mixture of reacted gases is discharged out of the reaction tower through a gas outlet tube at the bottom. Although this reaction tower has an advantageous of lower temperature difference inside the tower, it has disadvantages of low catalyst loading coefficient and high investment. Other reactors, such as SPC super-conversion-ratio reactor disclosed in JP 63-123433 by Mitsubushi Corporation, Japan, has the catalysts filled between an inner sleeve and an outer sleeve, however, they will suffer from the same disadvantage of low catalyst loading coefficient. In recent years, with the expanding applications of methanol as a chemical raw material and fuel, the scales of the devices for producing methanol are enlarged. Lurgi Company, Germany, has put forward a concept of Megan methanol, and has developed a system which combines gas-cooling and water-cooling on shell-and-tube reactor (See Nitrogen & methanol No. 261 H.W. Balthazar Jan/Feb 2003). The first system with the output of 5,000 tons/day has been successfully put into operation in Atlas, Trinidad and Tobago. Although this is the first system of single-serial device of Megan methanol with the annual output of 1,600,000 tons in the world, such a system comprises two parallelly connected shell-and-tube reaction towers and an gas-cooled reaction tower attached thereto in series, and will have the shortcomings of excessive number of reaction towers, high investment, and large resistance in methanol synthesis tower.

DAVY Inc has provided a large-scale methanol synthesis tower with in-tube water cooling, such a device has been used in a system having a daily output of 5,400 tons in Trinidad and Tobago (See "International Methanol conference in China", 2005.4.20). This tower is of a vertical type with the catalyst layer as high as dozens of meters, resulting in the catalyst for the synthesis of methanol, which is obtained by pressure-molding, being crushed easily, the densities of the upper part and the lower part of the catalyst not being consistent with each other, and, in turn, the distribution of radial-flowed reaction gases in the catalyst layer being uneven. Therefore, the reaction efficiency of such reaction tower is low.

It is an object of the present invention, according to the features of gas-solid phase catalytic exothermic reversible reactions, to overcome the drawbacks of the prior art and to provide a reaction tower having the advantages of little temperature difference inside the Catalyst layer, high catalyst activity, simple and reliable structure, and good operational performance. Such a reaction tower is especially suitable for use in large-scale chemical engineering systems.

Another aspect of the present invention is to provide a process of catalytic synthesis by using the reaction tower.

### Summary of the invention

In the present invention, there provides a transverse tubular heat exchange reaction tower, comprising:
a pressured shell (P);
two shell covers (E₁, E₂) connected to the pressured shell (P) at opposite two ends;
two tube plates (D₁, D₂) disposed vertically between the shell (P) and the two shell covers (E₁, E₂), respectively;
heat exchange tubes (B) linked by the two tube plates;
a catalyst (K) loaded outside the heat exchange tubes (B);
a porous support plate (A) for supporting the catalyst (K);
a porous gas distributor (C) above the catalyst (K);
a feed gas inlet (1) and a reactant gas outlet (2) on the shell (P), and
cooling medium inlet(s) (3) on one shell cover (E2) and cooling medium outlet(s) (4) on the other shell cover (E1);
wherein the heat exchange tubes (B) are disposed transversely and each of the heat exchange tube (B) has two open ends that pass through the tube plates (D1, D2), respectively; and
wherein the heat exchange tubes (B) are distributed non-uniformly along the vertical direction, and wherein the density of the heat exchange tube in the upper half of the reaction tower is higher than that in the lower half; and
wherein the heat exchange tubes (B) in the upper half comprise 5 tube rows uniformly distributed within the half and the heat exchange tubes (B) in the lower half comprise 3 tube rows uniformly distributed within the half.

In another aspect of the present invention, there provides a process of catalytic synthesis by using the reaction tower, said process comprising the following steps:
Adding through the feed gas inlet 1 feed gas G into the reaction tower, the feed gas G flowing into the catalyst layer outside the heat exchange tubes B through the pores of the gas distributor C, passing through the catalyst layer downwardly and vertically to perform the reaction, flowing out of the catalyst layer through the pores in the support plate A and, in turn, out of the reaction tower through the gas outlet 2; and
introducing into the reaction tower a cooling medium L through the cooling medium inlet 3 of the shell cover E, the cooling medium L flowing into the heat exchange tubes B at their open inlets linked by the tube plate or circular tube D between the shell cover(s) E and the shell P at one end of the heat exchange tubes B, passing laterally through the heat exchange tubes B while heat exchanging with the reaction gas passing through the catalyst layer downwardly and vertically, and then flowing out of the heat exchange tubes B at their open outlets at another end of the heat exchange tubes B, and, thereafter, discharging from the reaction tower through the cooling medium outlet 4 of the shell cover E.

In a preferred embodiment, the tube plates D₁ and D₂, which link the heat exchange tubes B together, are connected to the shell covers E of the shell P, respectively, becoming a partition plate to separate the cooling medium L and the reaction gas G. The inlet 3 and outlet 4 of the cooling medium are located respectively on the shell covers E₂ and E₁ at both ends of the shell. The cooling medium L flows in a plurality of heat exchange tubes B from one end to the other end along the same direction.

In a preferred embodiment, a horizontal diaphragm plate F can be disposed in the space constituted by the shell cover E₁ at one end of the shell and the tube plate D₁, separating said space into two chambers, chamber H and chamber I. The chamber I in the shell cover E₁ has the inlet 3 of the cooling medium L, while the chamber H has the outlet 4 of the cooling medium L. The shell cover E₂ on the other end of the shell together with the tube plate D₂ constitute a space J. The cooling medium L can be introduced into the chamber I through inlet 3, flowing, in sequence, from the chamber I into individual heat exchange tube B connected with the chamber I, from the heat exchange tube B into the chamber J in the shell cover E₂ at the other end, from the chamber J backward into individual heat exchange tubes B connected with the chamber H, and out of the chamber H through the outlet 4.

In a preferred embodiment, the tube plate D₁ for linking the heat exchange tubes B, the shell P and the shell cover E₁ constitute a chamber, chamber H, while there is an inner shell cover E₃ within the shell cover E₂, the tube plate D2 for linking another end of the heat exchange tube B at the other end and the inner shell cover E₃ constitute a chamber, chamber J. The tube plate D₂ can be hermetically attached to the shell P by a removable shield ring Q, and both of the tube plate D₂ and the inner shell cover E₃ can be freely and reversely extensible. The inlet 3 of the cooling medium L at the shell cover E₂ and the corresponding inlet of the cooling medium L at the inner shell cover E₃ are connected by an elastic tube M or by a conduit sealed with a stuffing box. The medium L is introduced into the chamber J within the inner shell cover E₃ through the inlet 3 and through the elastic tube M, flowing laterally through the heat exchange tubes B to the chamber H within the shell cover E₁ at the other end, and discharging from the reaction tower through the outlet 4 at the chamber H.

In a preferred embodiment, each of the above-mentioned transverse heat exchange tubes B has an angle θ from a horizontal plane of less than 45°, preferably from 7 to 30°. When the angle is not zero, the heat exchange tubes B are single-pass oneway straight tubes, with the end of the cooling medium outlet 4 higher than the end of the cooling medium inlet 3. In addition, a transverse tubular heat exchange reactor R_{A} can be combined with a vertical axial gas-cooled reactor R_{B} to form a combined reactor, wherein the reactor R_{B} comprises internal counter-current tubes with catalyst K loaded outside. The feed gas is introduced into the internal tubes in the reactor R_{B} from the inlet 1 at the bottom of R_{B}, passing through the tubes countercurrently with the reaction gas outside the internal tubes while heat exchanging with the catalyst layer outside the tubes to elevate the temperature thereof to about 230°C, and then discharging from the reaction tower through the tube outlet 2. The discharged gas is introduced into the transverse tubular reactor R_{A} to perform further reaction, the reaction heat is removed by a medium (such as water) within the heat exchange tubes thereof. The gas discharged from R_{A} is introduced from the inlet 3 of the reactor R_{B} into the catalyst layer K outside the tubes in R_{B} to keep on reacting, and eventually discharged from the reactor via the outlet 4.

### Brief Description of the Drawings

The present invention will be further described by referring to the drawings of Fig. 1, 2, 3, 4, 5 and 13. The remaining figures do not illustrate the invention.
Fig. 1 shows schematically a simple transverse tubular heat exchange reactor of the present invention.
Fig. 2 shows schematically a simple transverse tubular heat exchange reactor of the present invention in side view.
Fig. 2-1 shows schematically a simple transverse tubular heat exchange reactor in side view, wherein, the heat exchange tubes are flat tubes.
Fig. 3 shows schematically a dual-pass transverse tubular reactor having a partition plate within the shell cover on one end.
Fig. 4 shows schematically an one-way transverse tubular reactor having an inner shell cover on one end.
Fig. 5 shows schematically a dual-pass transverse tubular reactor having a partition plate within the shell cover on one end, and an inner shell cover on the other end.
Fig. 6 shows schematically an U shaped transverse reactor having a partition plate within the shell cover on one end.
Fig. 7 shows schematically a dual-pass transverse tubular reactor having several groups of partition plates within inner shell covers on one end, and inner shell covers on the other end.
Fig. 8 shows schematically a reactor having several groups of U shaped tubes.
Fig. 9 shows schematically an U shaped tube reactor having dual tube plates.
Fig. 10 shows schematically a dual sleeve reactor having dual tube plates.
Fig. 11 shows schematically a reactor having two groups of bilateral symmetric U shaped tubes.
Fig. 12 shows schematically a transverse reactor having spiral tubes as the heat exchange tubes.
Fig. 13 shows schematically the combination of a tilting transverse tubular water-cooled heat exchange reactor and an gas-cooled heat exchange reactor.

### Detailed Description of the Preferred Embodiments of the Invention

The term "transverse" or "lateral" as used herein refers to the direction in an angle with a horizontal plane of less than ±45°, preferably less than ±30°, and more preferably less than ±5°.

The term "vertical" or "upright" as used herein refers to the direction in an angle with the direction perpendicular to a horizontal plane of less than ±45°, preferably less than ±30°, and more preferably less than ±5°.

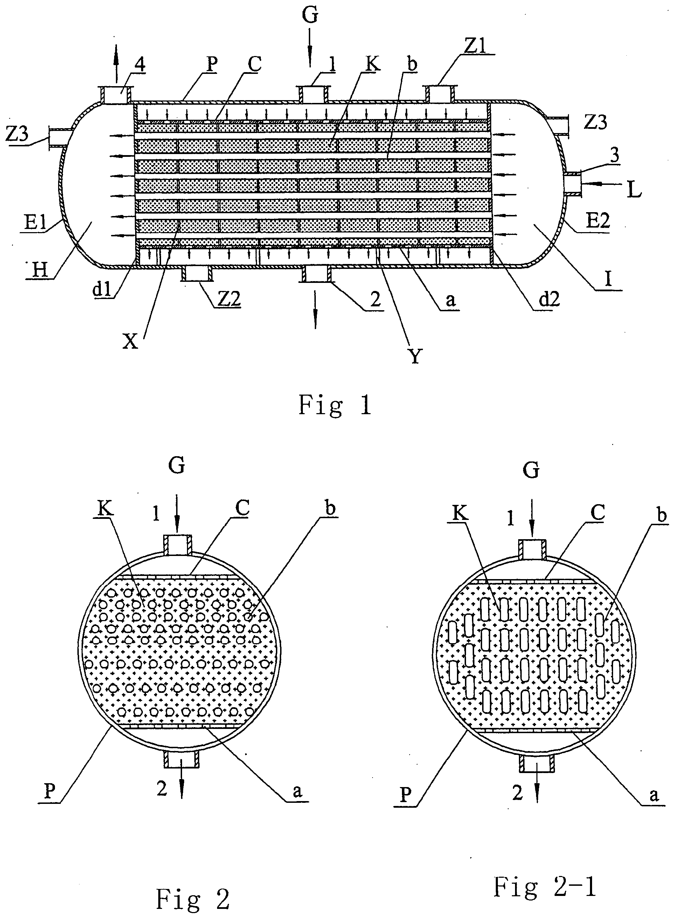

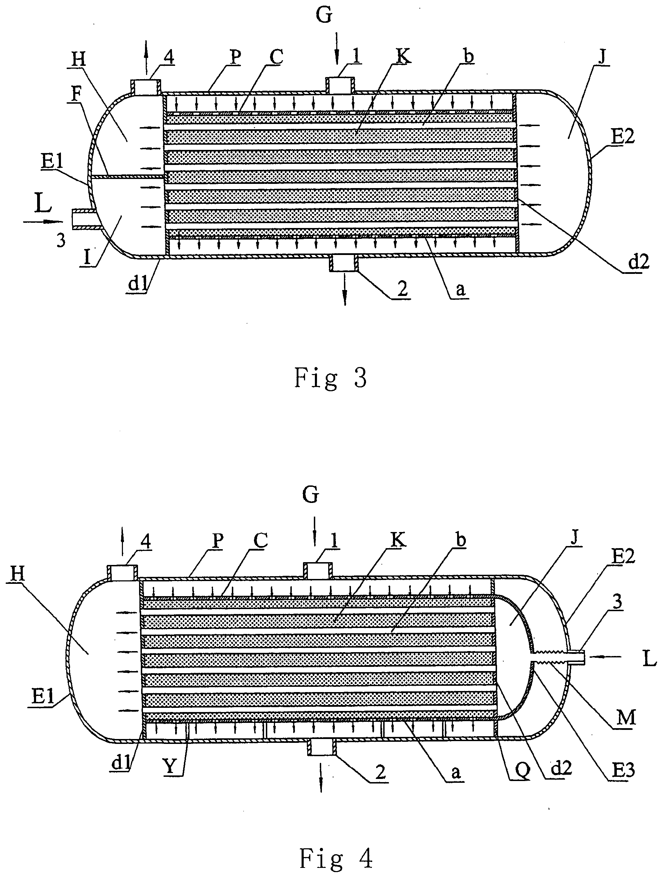

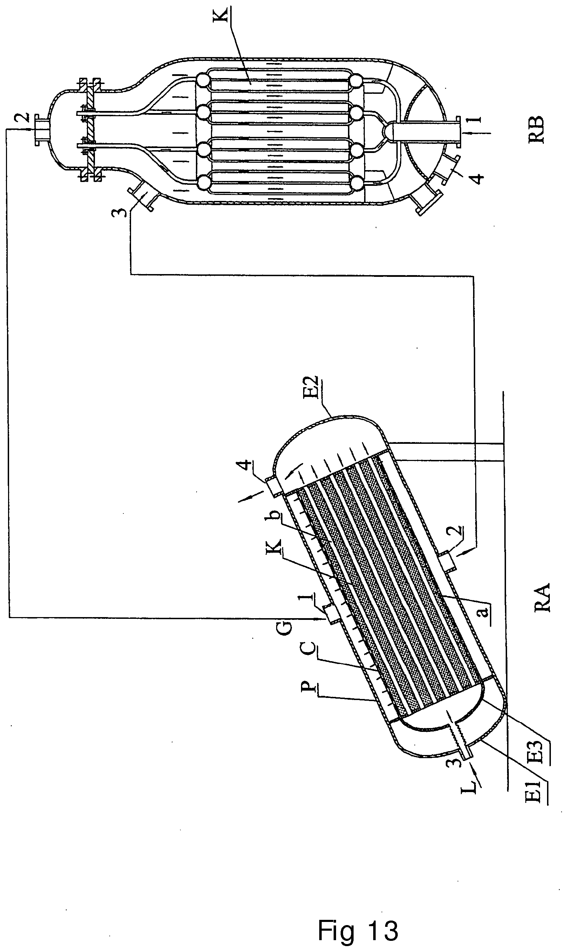

Referring to Fig. 1 and Fig. 2, a pressured container is constituted by a cylindrical body P and shell covers E₁ and E₂ disposed respectively at both ends thereof. In the container, there are a left tube plate D₁ and a right tube plate D₂, and a plurality of heat exchange tubes B linked by the left tube plate D₁ and the right tube plate D₂. The heat exchange tubes are supported by a positioning plate X to avoid movement and vibration. The catalyst layer K are packed between the heat exchange tubes, and the numbers of heat exchange tubes and the area to perform the heat exchange can be optimized according to the extent of the heat released by reaction during the gas flowing vertically. If necessary, a layer of adiabatic catalyst bed having special thickness can be disposed above the topmost heat exchange tube. In the cylinder body, there is a porous catalyst support plate A at the bottom, and a porous gas distribution plate C at the top. The feed gas G is introduced into the top space in the reactor above the distribution plate C through the inlet 1 on the top of the cylinder body. Optionally, there is a top gas distribution tube inside of the reactor shell P connected to the inlet 1, in this case, the feed gas G can be introduced into the top space in the reactor above the distribution plate C through the inlet 1 and then passed through the top gas distribution tube. The feed gas enters uniformly into the catalyst layer between the tubes, flowing downwards to perform the reaction until reach the bottom of the catalyst layer. The reacted gas passes through the porous plate A, and is collected and then discharged out of the reaction tower through the outlet 2. The porous plate A at the bottom can have a layer of screen on its surface, on the screen there can be some heat-resistant ceramic particles. The porous plate can be supported by several support plates Y, or can be supported by slideable glidewheels. The cooling medium L, such as water, is introduced into the reaction tower through the inlet 3 on the shell cover E₂, passing through the tube plate D₂ and flowing into individual heat exchange tube B. During its flowing within the tubes, the medium absorbs the reaction heat from the catalyst layer outside the heat exchange tubes. The absorbed heat is used to elevate the temperature of the medium, or to vaporize the medium, such as water, into a vapor. After passing through the tube plate D₁, the medium flows out of the reaction tower through the outlet 4. As a result of the heat absorption by the medium as described above, the reaction heat can be removed from the catalyst layer in the reaction tower continuously and instantly, and the temperature in the reaction catalyst layer can be maintained uniform and stable. The catalyst can be loaded into or removed from the reaction tower through the gas inlet 1. Alternatively, a manhole Z₁ can be formed on the top of the shell body for loading and/or removing the catalyst. The top gas distribution plate can be formed by several sub-plates such that loading and/or removing the catalyst can be performed easily. Alternatively, the top gas distribution plate can be formed by staggerly overlapping two or more porous plates in order to dispense the gas more uniformly. In addition, the porous catalyst support plate A at the bottom can be formed by several sub-plates, with round orifices therein for removing the catalyst. In addition to the gas outlet 2, several manholes Z₂ can be formed at the bottom to discharge the catalyst. Manholes Z₃ and Z₄ can also be formed on the shell covers E₁ and E₂ on both ends. Thermoprobes containing thermocouples can be disposed across the shell cover E and the tube plate D₁. In addition to being fixed by the tube plates at both ends thereof, the heat exchange tubes B can be further supported by a plurality of positioning plates X disposed longitudinally between these two tube plates, so as to avoid the heat exchange tubes from moving and vibration (these positioning plates will not be redundantly shown or illustrated in Fig. 3 and Fig. 13). The heat exchange tubes can be circular tubes, flat tubes produced by pressing the circular tubes or by welding plates such as those shown in Fig. 2-1, corrugated tubes or spiral tubes.

Fig. 3 shows a structure of the dual-pass heat exchange tubes. Differing from Fig. 1, a horizontal diaphragm plate F is disposed in the space constituted by the shell cover E₁ at one end of the shell and the tube plate D₁, dividing said space into two chambers, chamber H and chamber I. there is an inlet 3 of the cooling medium L in the chamber I while an outlet 4 in the chamber H. The cooling medium L is introduced into the chamber I through the inlet 3, flowing from the lower chamber I into and passing through the heat exchange tubes B to the space surrounded by the tube plate D₂ and shell cover E₂ at the other end, thereafter, the medium is pressed backward through the heat exchange tubes B connected to the chamber H, and discharged out of the chamber H through the outlet 4.

In the reaction tower as shown in Fig. 4, the tube plate D₁ for linking the heat exchange tubes B, the shell P and the shell cover E₁ constitute a chamber, chamber H, while the tube plate D₂ at the other end for linking tubes B, together with an inner shell cover E₃ within the shell cover E₂ constitute another chamber, chamber J. The inner shell cover E₃ is connected to the inlet 3 of the cooling medium L on the shell cover E₂ by an elastic tube M or by a straight tube sealed with a stuffing box. The medium L is introduced into the chamber J within the inner shell cover E₃ through the inlet 3 and, in turn, through the elastic tube M, passing laterally through the heat exchange tubes B to the chamber H within the shell cover E₁ at the other end, and then discharging out of the reaction tower through the outlet 4. The tube plate D₂ can be attached to the shell P by welding, or can be removably attached to the shell P by a shield ring Q instead of welding, so that the tube plate D₂ and the inner shell cover are reversely and freely extensible.

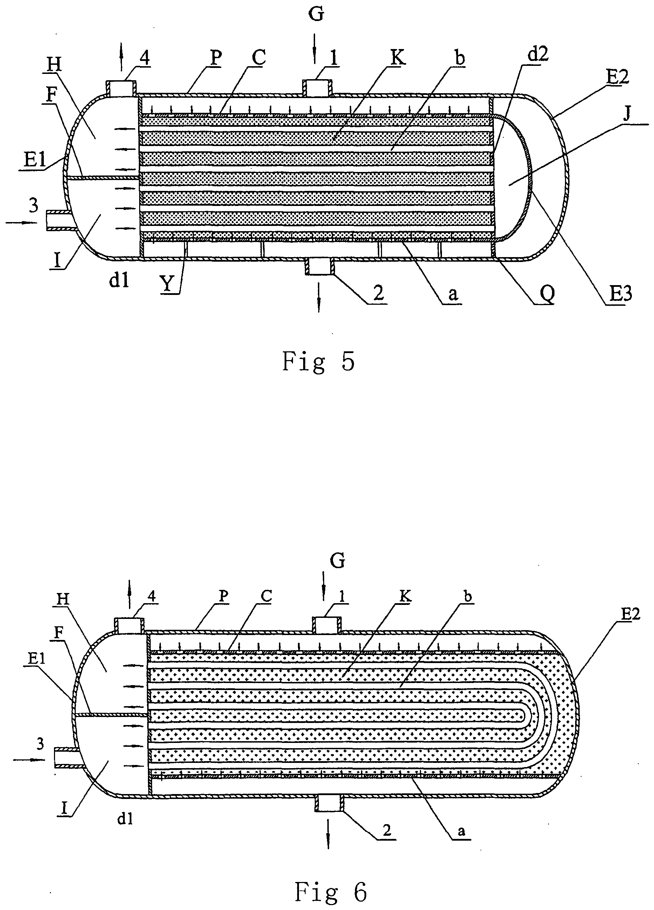

In the reaction tower shown in Fig. 5, similar to that of Fig. 3, the space constituted by the shell cover E₁ and the tube plate D₁ is divided into two chambers, chambers H and I, by a horizontal diaphragm plate F. There is an inner shell cover E₃ within the shell cover E₂, the inner shell cover E₃ and the tube plate D₂ constitute a chamber, chamber J. The medium L introduced into the chamber I through the inlet 3, flows through the heat exchange tubes B fluid communicated with the chamber I into the chamber J within the inner shell cover E₃, then passes backward to the chamber H through the heat exchange tubes B fluid communicated therewith, and then discharges through the outlet 4. The tube plate D₂ can be attached to the shell P by a shield ring Q, so that tube plate D₂ and the inner shell cover can be reversely and freely extensible.

In the reaction tower as shown in Fig. 6, the space constituted by the shell cover E₁ of the shell P and the tube plate D₁ is divided into two chambers, chambers H and I, by a horizontal diaphragm plate F. Each of the heat exchange tube B is a U shaped tube, the ends of each of the U shaped tube fluid communicate with the chamber H and chamber I, respectively. The end elbows of the U shaped tubes near the cover E₂ are reversely and freely extensible , without linked by any tube plates.

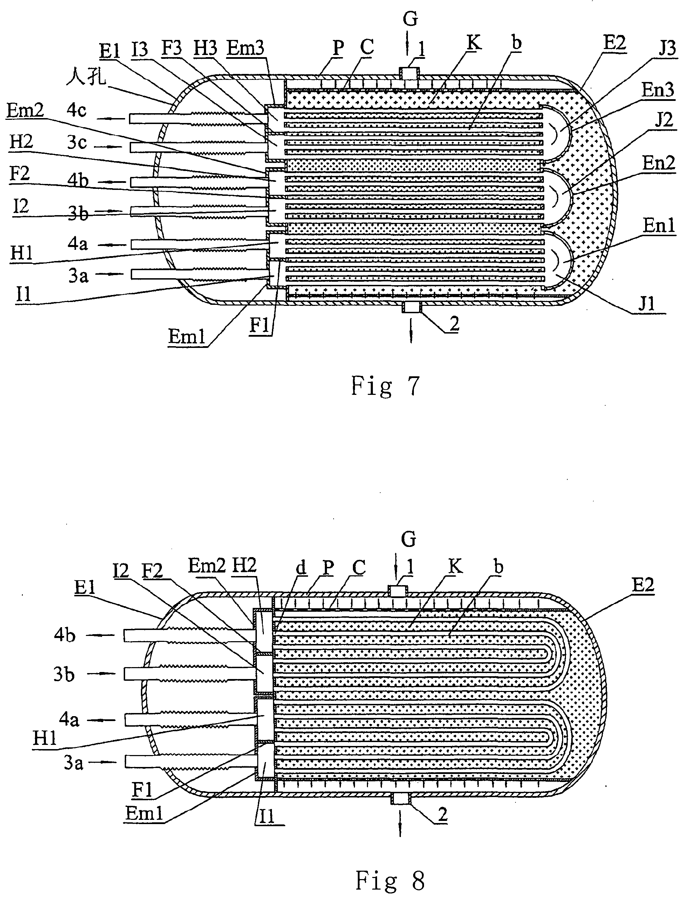

In the reaction tower as shown in Fig. 7, the heat exchange tubes B are divided into several groups vertically. Each group of tubes B has a sub-inner shell cover En₁, En₂, or En₃ at one end, the tube plate covered by a sub-inner shell cover and the sub-inner shell cover constitute a sub-chamber, chamber J₁, J₂, or J₃. At the other end of the group of tubes, there are sub-inner shell cover Em₁, Em₂, or Em₃. A group of tubes covered by a sub-inner shell cover Em₁ is isolated from another group of tubes covered by another sub-inner shell cover Em₂. The space surrounded by a sub-inner shell cover Em₁ and the tube plate covered by said sub-inner shell cover is divided by a horizontal diaphragm plate, plate F₁, F₂, or F₃, into a group of two chambers, chambers H₁ and I₁, or H₂ and I₂, or H₃ and I₃. The chamber in each group of chambers has a cooling medium L inlet tube, tube 3a, 3b or 3c, or a cooling medium L outlet tube, tube 4a, 4b or 4c, each of the inlet or outlet tube is connected with the shell cover E₁ by an elastic tube or a conduit sealed by a stuffing boxes. The connections between the sub-shell covers Em₁, Em₂, and Em₃ and the shell cover E₁ of the shell P, respectively, are hermetical.

In the reaction tower as shown in Fig. 8, the heat exchange tubes B are U shaped tubes and are divided vertically into several groups (two groups in figure 8). Within the shell cover E₁, for each group of U shaped tubes, there is a sub- inner shell cover, cover Em₁ or Em₂, the tube plate D linking a group of U typed tubes and the sub-shell cover covering this group of U typed tubes constitute a space, which space is divided by a horizontal diaphragm plate, plate F₁, or F₂ into a group of two chambers, chambers H₁ I₁, or H₂, I₂. Each chamber in a group of chambers fluid communicates with one end of a group of U shaped tubes. Alternatively, the horizontal diaphragm plates F₁ and F₂ can be used to form the chambers H₁, I₁, H₂, and I₂ together with the shell cover E₁ directly without by virtue of the sub-inner shell cover

When the heat exchange tubes B are divided into several groups as indicated in Fig. 7 and Fig. 8, a manhole can be formed on the shell cover E₂ for installing and/or repairing the heat exchange tubes. The number of the groups can be fluctuated according to the capacity and diameter of the reaction tower. Besides horizontally dividing the groups, the tubes can further be divided vertically.

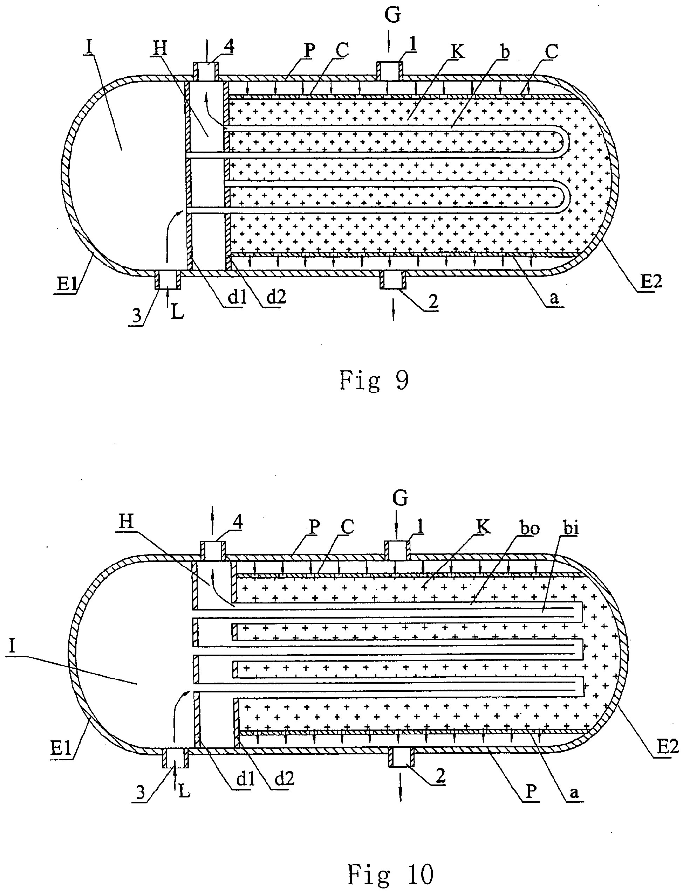

In the reaction tower as shown in Fig. 9, the heat exchange tubes are U shaped tubes, each tube linked by the tube plate D₁ at one end and by the tube plate D₂ at the other end. The space surrounded by the tube plate D₁ and the shell cover E₁ is a chamber, chamber I, having an inlet 3 of the cooling medium L. The tube plate D₂ is disposed near the tube plate D₁ at the side opposite to the shell cover E₁. The space between the two tube plates D₁ and D₂ becomes a chamber, chamber H, having an outlet 4.

In the reaction tower as shown in Fig. 10, each of the heat exchange tube B is a sleeve, wherein, inner tubes bᵢ are linked by the tube plate D₁ and fluid communicate with the medium inlet 3 located within the shell cover E₁, while outer tubes b₀ are linked by the tube plate d₂ and fluid communicate with the medium outlet 4 located between the two tube plates D₁ and D₂.

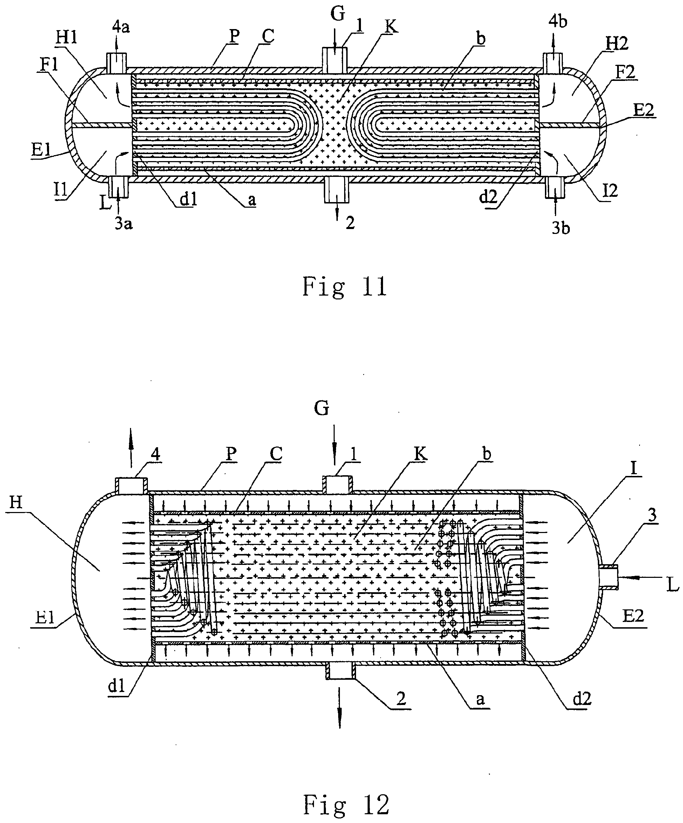

Fig. 11 shows a reaction tower comprising two groups of bilateral symmetric U shaped tubes, which can be regarded as being formed by symmetrically assembling two reaction towers of U shaped tubes as shown in Fig. 6 together. The spaces constituted by the shell cover E₁ and tube plate D₁ as well as by the shell cover E₂ and tube plate D₂ are divided by horizontal diaphragm plates F₁, F₂, respectively, to form two groups of chambers, an upper chamber H₁ and a lower chamber I₁ in one group as well as an upper chamber H₂ and a lower chamber I₂ in another group. This structure is particularly suitable for enhancing the productivity of the reaction tower by increasing the length of the reactor in the case that the diameter of the reactor is limited.

Fig. 12 shows schematically a reaction tower using spiral tubes as the heat exchange tubes. The heat exchange tubes B are spiral tubes fluid communicating with the tube plates D₁ and D₂ at both ends. The two shell covers E₁ and E₂ and the tube plates D₁ and D₂ constitute two chambers, chamber H and I, respectively. The cooling medium is introduced into the chamber I through the inlet 3 of the shell cover E₂, flowing, in sequence, through the tube plate D₂, spiral tubes B, and the chamber H surrounded by the tube plate D₁ and the shell cover E₁, and then flowing out of the reaction tower via the outlet 4.

Fig. 13 shows schematically a reaction system formed by the combination of a transverse tubular heat exchange reactor, such as the reactor R_{A} equipped with an inner shell cover as shown in Fig. 4 and an vertical axial gas-cooled reactor R_{B}. The reactor R_{B} comprises countercurrent heat exchange tubes and catalyst K loaded outside the tubes. The feed gas is introduced into the heat exchange tubes in the reactor R_{B} through the inlet 1 at the bottom of R_{B}, during flowing within the tubes counter-currently against the flowing direction of the reaction gas in the catalyst outside, the feed gas performs heat exchange with catalyst outside, elevating the temperature to about 230°C, the heat exchanged gas is then discharged out of the reactor R_{B} through the outlet 2 and introduced into the transverse tubular reactor R_{A} to perform reaction. The reaction heat in reactor R_{A} is removed by a medium (such as water) within the heat exchange tubes thereof. The gas reacted in the reactor R_{A} is discharged out of the reactor R_{A}, and introduced through an inlet 3 of the reactor R_{B} into the catalyst layer K outside the tubes in R_{B} to perform further reaction, the further reacted gas can be discharged out of the reactor R_{B} via the outlet 4. The transverse tubular reaction R_{A} forms an angle with a horizontal plane of 25°, which is advantageous for mixing the vapor and the water.

### Beneficial Effects

Compared with the prior art, the present invention has the following prominent advantages.
(I) The catalyst is loaded between the heat exchange tubes, thus increasing the catalyst load coefficient, which can be up to 70%. In contrast, in the shell-and-tube methanol reactor of Lurgi Company, Germany, the catalyst is loaded in the tubes, and the catalyst load coefficient is only 30%. Therefore, with respect to the reaction towers having the same productivity, the volume and the investment of the present reaction tower will be smaller than those of the prior art. Meanwhile, according to the present invention, the contents of the catalyst loaded and the productivity can be enlarged by increasing the length of the reaction tower, which is particularly suitable for the systems of large-scale, or super large scale, such as those of the annual output in the order of million tons.
(II) The resistance to the flowing of the gas can be reduced, thus decreasing the power consumption, because the cross section for flowing gases through the catalyst layer can be largely increased since the catalyst is loaded between the tubes, and because the gas flows through the catalyst layer radially instead of axially as in the Lurgi shell-and-tube reaction tower, finally the cross section of the catalyst for flowing the gas is increased and the height of the catalyst layer can be decreased.
(III) In the catalyst layer, the gas flows orthogonally across the heat exchange tubes, such an orthogonal cross flowing method enhances the heat transfer coefficient and efficiency, decreasing the temperature difference.
(IV) The number of the heat exchange tubes can be optimized according to the reaction heat released along the vertical direction, which overcomes the defect of the axial shell-and-tube reactor wherein the heat transfer surface along the axial direction can not be changed.
(V) The catalyst loading outside the tubes becomes an integrity, which enables uniform loading.
(VII) The shell covers equipped with flanges can be used to facilitate the operations of drawing the heat exchange tubes together with the inner shell covers out of the shell P, causing the cleaning of the heat exchange tubes and loading and unloading the catalyst more convenient.

### Example

Methanol synthesis under low pressure was performed by using the transverse U shaped tube synthesis tower as shown in Fig. 6. The tower has an inner diameter of about 6.5 m, and a length of about 16 m. The synthesis was conducted under the following conditions: loading copper-based methanol NC306 or C302, the loading amount of the catalyst being about 390 m³, the synthesis pressure being about 8.9 MPa, the composition of the feed gas comprising H₂ 63.73%, CO 10.25%, CO₂ 5.87%, H₂O 0.06%, N₂ 7.81%, CH₄ 12.02% and CH₃OH 0.28%, the flowing rate of the feed gas being about 3,600,000Nm³/h, the temperature of the hot point in the catalyst layer being about 260°C, to give a methanol productivity of about 10,000 tons/day, with 10,000 tons/day of 3.8 MPa vapor concomitantly produced by the boiler water in the heat exchange tubes B heated by the reaction heat. As a comparison, in the case of using Lurgi shell-and-tube tower (Germany) for the production of methanol in the same amount and under the same conditions, it is necessary to use six synthesis towers having an inner diameter of over 4 meters. The investment cost will be doubled or more.

Although the present invention has been detailedly described with reference to particular examples and the drawings, the present invention is not limited to these contents. For example, circular tubes can be used as divider and collecting pipes instead of the heat transfer tubes B fluid communicated with the tube plates and the inner shell covers. In addition, corrugated tubes or spiral pipes can be used as the heat exchange tubes.

## Claims

1. A transverse tubular heat exchange reaction tower, comprising:
a pressured shell (P);
two shell covers (E₁, E₂) connected to the pressured shell (P) at opposite two ends;
two tube plates (D₁, D₂) disposed vertically between the shell (P) and the two shell covers (E₁, E₂), respectively;
heat exchange tubes (B) linked by the two tube plates;
a catalyst (K) loaded outside the heat exchange tubes (B);
a porous support plate (A) for supporting the catalyst (K);
a porous gas distributor (C) above the catalyst (K);
a feed gas inlet (1) and a reactant gas outlet (2) on the shell (P), and
cooling medium inlet(s) (3) on one shell cover (E2) and cooling medium outlet(s) (4) on the other shell cover (E1);
wherein the heat exchange tubes (B) are disposed transversely and each of the heat exchange tube (B) has two open ends that pass through the tube plates (D1, D2), respectively; and
wherein the heat exchange tubes (B) are distributed non-uniformly along the vertical direction, and wherein the density of the heat exchange tube in the upper half of the reaction tower is higher than that in the lower half; and
wherein the heat exchange tubes (B) in the upper half comprise 5 tube rows uniformly distributed within the half and the heat exchange tubes (B) in the lower half comprise 3 tube rows uniformly distributed within the half.

2. The reaction tower according to claim 1, wherein the heat exchange tubes (B) are individually flat tubes or corrugated tubes.

3. A process of catalytic synthesis by using the reaction tower according to any of claims 1 to 2, comprising the steps of:
adding a feed gas (G) into the tower through the feed gas inlet (1), said feed gas passing through the pores of the gas distributor (C) into the catalyst layer outside the heat exchange tube(s) (B), performing reaction during its downwardly flowing therethrough while the mixture containing the fed gas (G) and the reaction product heat exchanges with the heat-exchanging medium (L) flowing within the transverse heat exchange tubes (B), flows out of the catalyst layer through the pores in the support plate (A), and discharges from the reaction tower through the gas outlet (2); and,
adding a cooling medium (L) through the cooling medium inlet(s) (3) of the shell cover (E) into the reaction tower, the cooling medium (L) flowing into one opening of the heat exchange tube(s) (B) linked by the tube plate between the cover (E) and shell (P), passing therethrough laterally, flowing out of the heat exchange tubes at the other opening ends of the tubes and then discharging from the reaction tower through the cooling medium outlet (4) of the shell cover (E).

## Patentansprüche

1. Quergerichteter rohrförmiger Wärmetauschreaktionsturm umfassend:
eine unter Druck gesetzte Hülle (P);
zwei Hüllenabdeckungen (E₁, E₂), die mit der unter Druck gesetzten Hülle (P) an gegenüberliegenden zwei Enden verbunden sind;
zwei Rohrplatten (D₁, D₂), die jeweils vertikal zwischen der Hülle (P) und den zwei Hüllenabdeckungen (E₁, E₂) angeordnet sind;
Wärmetauschrohre (B), die durch die zwei Rohrplatten verbunden sind;
einen Katalysator (K), der außerhalb der Wärmetauschrohre (B) geladen ist;
eine poröse Trägerplatte (A) zum Tragen des Katalysators (K);
einen porösen Gasverteiler (C) über dem Katalysator (K);
einen Speisegaseinlass (1) und einen Reaktionsgasauslass (2) an der Hülle (P), und
Kühlmitteleinlass/Kühlmitteleinlässe (3) an einer Hüllenabdeckung (E2) und Kühlmittauslass/Kühlmittelauslässe (4) an der anderen Hüllenabdeckung (E1);
wobei die Wärmetauschrohre (B) quergerichtet angeordnet sind und wobei jedes der Wärmetauschrohre (B) zwei offene Enden aufweist, die jeweils durch die Rohrplatten (D1, D2) hindurchgehen; und
wobei die Wärmetauschrohre (B) nicht gleichmäßig entlang der vertikalen Richtung verteilt sind, und wobei die Dichte des Wärmetauschrohres in der oberen Hälfte des Reaktionsturms höher ist als in der unteren Hälfte; und
wobei die Wärmetauschrohre (B) in der oberen Hälfte 5 Rohrreihen umfassen, die gleichmäßig innerhalb der Hälfte verteilt sind und die Wärmetauschrohre (B) in der unteren Hälfte 3 Rohrreihen umfassen, die gleichmäßig innerhalb der Hälfte verteilt sind.

2. Reaktionsturm nach Anspruch 1, wobei die Wärmetauschrohre (B) individuell flache Rohre oder gewellte Rohre sind.

3. Verfahren zur katalytischen Synthese durch Verwenden des Reaktionsturms entsprechend einem der Ansprüche 1 bis 2, umfassend die Schritte von:
Hinzufügen eines Speisegases (G) in den Turm durch den Speisegaseinlass (1), wobei das Speisegas durch die Poren des Gasverteilers (C) in die Katalysatorschicht hindurchgeht, die außerhalb des/der Wärmetauschrohr(e) (B) ist, Durchführen einer Reaktion während es nach unten dort hindurch fließt, während die Mischung, die das Speisegas (G) enthält und das Reaktionsprodukt mit dem Wärmeaustauschmittel (L) Wärme austauscht, das innerhalb der quergerichteten Wärmetauschrohre (B) fließt, aus der Katalysatorschicht durch die Poren in der Trägerplatte (A) fließt und von dem Reaktionsturm durch den Gasauslass (2) abgelassen wird; und
Hinzufügen eines Kühlmittels (L) durch den/die Kühlmitteleinlass/Kühlmitteleinlässe (3) der Hüllenabdeckung (E) in den Reaktionsturm, wobei das Kühlmittel (L) in eine Öffnung des/der Wärmetauschrohr(e) (B) fließt, welche durch die Rohrplatte zwischen der Abdeckung (E) und der Hülle (P) verbunden sind, und seitlich dadurch hindurchgehen, Hinausfließen aus den Wärmetauschrohren an den anderen Öffnungsenden der Rohre und dann Auslassen aus dem Reaktionsturm durch den Kühlmittelauslass (4) der Hüllenabdeckung (E).

## Revendications

1. Une tour de réaction à échangeur thermique tubulaire transversal, comprenant :
une enveloppe sous pression (P) ;
deux capots d'enveloppe (E1, E2) reliés à l'enveloppe sous pression (P) en deux extrémités opposées ;
deux plaques à tubes (D1, D2) disposées verticalement entre l'enveloppe (P) et les deux capots d'enveloppe (E1, E2), respectivement ;
des tubes échangeurs de chaleur (B) reliés par les deux plaques à tubes ;
un catalyseur (K) chargé à l'extérieur des tubes d'échange de chaleur (B) ;
une plaque support poreuse (A) pour supporter le catalyseur (K) ;
un distributeur poreux de gaz (C) au-dessus du catalyseur (K) ;
une entrée d'alimentation en gaz (1) et une sortie de gaz de réaction (2) sur l'enveloppe (P), et
une (des) entrée(s) de milieu de refroidissement (3) sur un capot d'enveloppe (E2) et une (des) sortie(s) de support de refroidissement (4) sur l'autre capot d'enveloppe (E1) ;
dans laquelle les tubes échangeurs de chaleur (B) sont disposés transversalement et chacun des tubes échangeurs de chaleur (B) possède deux extrémités ouvertes qui passent au travers des plaques à tubes (D1, D2), respectivement ; et
dans laquelle les tubes échangeurs de chaleur (B) sont distribués de façon non uniforme suivant la direction verticale, et dans laquelle la densité du tube échangeur de chaleur dans la moitié supérieure de la tour de réaction est supérieure à celle dans la moitié inférieure ; et
dans laquelle les tubes échangeurs de chaleur (B) de la moitié supérieure comprennent 5 rangées de tubes distribués uniformément dans la moitié et les tubes échangeurs de chaleur (B) de la moitié inférieure comprennent 3 rangées de tubes distribués uniformément dans la moitié.

2. La tour de réaction selon la revendication 1, dans laquelle les tubes échangeurs de chaleur sont individuellement des tubes plats ou des tubes ondulés.

3. Un processus de synthèse catalytique par utilisation de la tour de réaction selon l'une des revendications 1 à 2, comprenant les étapes suivantes :
admission d'un gaz d'alimentation (G) dans la tour via l'entrée de gaz d'alimentation (1), ledit gaz d'alimentation traversant les pores du distributeur de gaz C jusqu'à la couche de catalyseur à l'extérieur du ou des tubes échangeurs de chaleur (B), la production de la réaction durant son écoulement vers le bas au travers tandis que le mélange contenant le gaz alimenté (G) et le produit de réaction échange sa chaleur avec le milieu d'échange de chaleur (L) s'écoulant à l'intérieur des tubes échangeurs de chaleur (B) s'écoule hors de la couche de catalyseur via les pores de la plaque support (A), et s'évacue de la tour de réaction via la sortie de gaz (2) ; et
admission d'un milieu de refroidissement (L) via la (les) entrée(s) de milieu de refroidissement (3) du capot d'enveloppe (E) dans la tour de réaction, le milieu de refroidissement (L) s'écoulant dans une ouverture du (des) tube(s) échangeur(s) de chaleur (B) relié(s) par la plaque à tubes entre le capot (E) et l'enveloppe (P), passant latéralement au travers, s'écoulant hors des tubes échangeurs de chaleur au niveau des autres extrémités d'ouverture des tubes puis s'évacuant de la tour de réaction via la sortie de milieu de refroidissement (4) du capot d'enveloppe (E).
